# DEMANDE DE BREVET EUROPEEN

(11) **EP 2 730 463 A1**
(43) Date de publication de la demande: **14.05.2014**
(21) Numéro de dépôt: 13192023.3
(22) Date de dépôt: 07.11.2013
(51) Int. Cl.: B60R 5/04

(54) **Système de recouvrement d'un compartiment à bagages de véhicule automobile**

(30) Priorité: 07.11.2012 FR 1260565
(71) Demandeur: CENTRE D'ETUDE ET DE RECHERCHE POUR L'AUTOMOBILE (CERA), 51100 Reims (FR)
(72) Inventeur: Brillon, Eric, 51390 Rosnay (FR)
(74) Mandataire: Sayettat, Julien Christian

(57) **Abrégé**

L'invention concerne un système (1) de recouvrement d'un compartiment à bagages de véhicule automobile, ledit système comprenant un cache bagages (2) comprenant un volet (3) de recouvrement, deux supports (4) latéraux dudit volet et deux dispositifs latéraux de verrouillage (5) dudit volet sur lesdits supports, chacun desdits dispositifs comprenant : une partie mâle (6) comprenant : un doigt monté en coulissement transversal entre une position déployée de verrouillage et une position rétractée de déverrouillage ; un mécanisme de montage dudit doigt sur ledit volet, ledit mécanisme étant agencé de sorte que le passage dudit doigt d'une desdites positions, quelle qu'elle soit, à l'autre se fasse par appui sur l'extrémité libre dudit doigt jusqu'à une position escamotée ; et une partie femelle comprenant : une butée supérieure bloquant un déplacement vers le haut dudit doigt lorsqu'il est en position déployée ; une pente inférieure agencée pour permettre une rétraction progressive dudit doigt jusqu'à sa position escamotée par appui effectué vers le bas sur ledit volet, lesdites butées étant écartées l'une de l'autre de manière à permettre le passage desdits doigts, une fois mis en position rétractée, de part et d'autre desdites butées.

## Description

L'invention concerne un système de recouvrement d'un compartiment à bagages de véhicule automobile, un cache bagages et un support d'un tel système.

Il est connu de réaliser un système de recouvrement d'un compartiment à bagages de véhicule automobile, ledit système comprenant un cache bagages comprenant un volet de recouvrement et deux supports latéraux dudit volet, lesdits supports étant destinés à être solidaires de la structure dudit véhicule, ledit système comprenant en outre deux dispositifs latéraux de verrouillage dudit volet sur lesdits supports.

Dans un tel agencement, le verrouillage/déverrouillage des dispositifs se fait en utilisant un organe d'actionnement disposé en partie transversale médiane du volet, ledit organe étant relié par des organes de transmission - tels que des tringles ou câbles - auxdits dispositifs.

Une telle réalisation est complexe, peu fiable et éventuellement bruyante, ceci en raison des dispersions dimensionnelles qui peuvent exister sur les tringles ou câbles.

Par ailleurs, une telle réalisation nécessite une adaptation d'un modèle de cache bagages à l'autre, puisque ces derniers ont des dimensions transversales variables.

L'invention a pour but de pallier ces inconvénients.

A cet effet, et selon un premier aspect, l'invention propose un système de recouvrement d'un compartiment à bagages de véhicule automobile, ledit système comprenant un cache bagages, ledit cache bagages comprenant un volet de recouvrement, ledit système comprenant en outre deux supports latéraux dudit volet, lesdits supports étant destinés à être solidaires de la structure dudit véhicule, ledit système comprenant en outre deux dispositifs latéraux de verrouillage dudit volet sur lesdits supports, chacun desdits dispositifs comprenant :
- une partie mâle montée latéralement sur ledit volet,
- une partie femelle solidaire d'un support respectif,

lesdites parties mâles comprenant chacune :
- un doigt monté en coulissement transversal entre une position déployée de verrouillage et une position rétractée de déverrouillage,
- un mécanisme de montage dudit doigt sur ledit volet, ledit mécanisme étant agencé de sorte que le passage dudit doigt d'une desdites positions, quelle qu'elle soit, à l'autre se fasse par appui sur l'extrémité libre dudit doigt jusqu'à une position escamotée correspondant à une rétraction supplémentaire dudit doigt par rapport à sa position rétractée,
   et lesdites parties femelles comprenant chacune :
- une butée supérieure bloquant un déplacement vers le haut dudit doigt lorsqu'il est en position déployée,
- une pente inférieure agencée pour permettre une rétraction progressive dudit doigt jusqu'à sa position escamotée par appui effectué vers le bas sur ledit volet,
lesdites butées étant écartées l'une de l'autre de manière à permettre le passage desdits doigts, une fois mis en position rétractée, de part et d'autre desdites butées.

Dans cette description, les termes de positionnement dans l'espace (haut, bas, supérieur, inférieur, transversal, latéral, avant, arrière, ...) sont pris en référence au système disposé dans le véhicule.

On précise que terme « volet », ou « panneau » décrit plus loin, peut aussi bien désigner un élément rigide qu'un cadre sur lequel est tendue une toile ou matériau souple analogue, ou tout autre élément autoportant.

Avec l'agencement proposé, les inconvénients précités sont résolus.

A partir de la configuration verrouillée des dispositifs de verrouillage, correspondant aux doigts en position déployée, on appuie sur le volet vers le bas pour mettre lesdits doigts en position escamotée au moyen des pentes qui induisent un effet de coulisseau.

Lorsque l'on supprime l'appui, les doigts se mettent en position rétractée, ce qui permet de relever le volet au dessus des butées supérieures.

Pour verrouiller à nouveau le volet, on appuie à nouveau sur le volet vers le bas, ce qui a pour effet, selon le processus sus décrit, de ramener les doigts en position escamotée.

Lorsque l'on supprime l'appui, les doigts se remettent en position déployée, ce qui permet de verrouiller à nouveau les dispositifs de verrouillage.

Selon d'autres aspects, l'invention propose un cache bagages et un support d'un tel système.

D'autres particularités et avantages de l'invention apparaîtront dans la description qui suit, faite en référence aux figures jointes, dans lesquelles :
- la figure 1 est une vue schématique en perspective partielle éclatée d'un doigt et de son mécanisme de montage selon un mode de réalisation,
- les figures 2 sont des vues schématiques de face analogues à la figure 1, le doigt étant monté par le mécanisme de montage, le doigt étant en cours de rétraction (2a), en position rétractée (2b) et en position escamotée (2c),
- la figure 3 est une vue schématique en perspective d'un système de recouvrement selon une réalisation, le volet étant déverrouillé et ouvert,
- la figure 4 est une vue schématique en perspective d'un système de recouvrement selon une autre réalisation, le volet étant déverrouillé et non positionné en position nominale de recouvrement,
- les figures 5 sont des représentations schématiques en coupe transversale partielle du fonctionnement d'un système selon l'invention, le doigt représenté étant en position déployée (5a), escamotée (5b) et rétractée (5c).

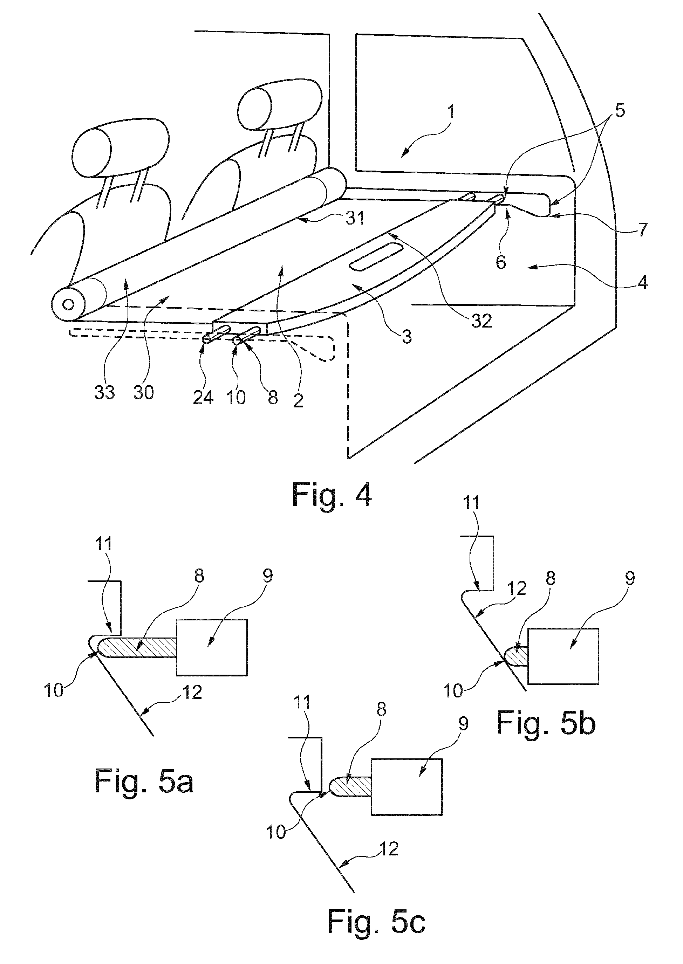

En référence aux figures, on décrit un système 1 de recouvrement d'un compartiment à bagages de véhicule automobile, ledit système comprenant un cache bagages 2, ledit cache bagages comprenant un volet 3 - notamment rotatif - de recouvrement, ledit système comprenant en outre deux supports 4 latéraux dudit volet, lesdits supports étant destinés à être solidaires de la structure dudit véhicule, ledit système comprenant en outre deux dispositifs latéraux de verrouillage 5 dudit volet sur lesdits supports, chacun desdits dispositifs comprenant :
- une partie mâle 6 montée latéralement sur ledit volet,
- une partie femelle 7 solidaire d'un support 4 respectif,
   lesdites parties mâles comprenant chacune :
- un doigt 8 monté en coulissement transversal entre une position déployée de verrouillage et une position rétractée de déverrouillage,
- un mécanisme - de type « push push » - de montage 9 dudit doigt sur ledit volet, ledit mécanisme étant agencé de sorte que le passage dudit doigt d'une desdites positions, quelle qu'elle soit, à l'autre se fasse par appui sur l'extrémité libre 10 dudit doigt jusqu'à une position escamotée correspondant à une rétraction supplémentaire dudit doigt par rapport à sa position rétractée,
   et lesdites parties femelles comprenant chacune :
- une butée supérieure 11 bloquant un déplacement vers le haut dudit doigt lorsqu'il est en position déployée (figure 5a),
- une pente inférieure 12 agencée pour permettre une rétraction progressive dudit doigt jusqu'à sa position escamotée (figure 5b) par appui effectué vers le bas sur ledit volet,
   lesdites butées étant écartées l'une de l'autre de manière à permettre le passage desdits doigts, une fois mis en position rétractée (figure 5c), de part et d'autre desdites butées.

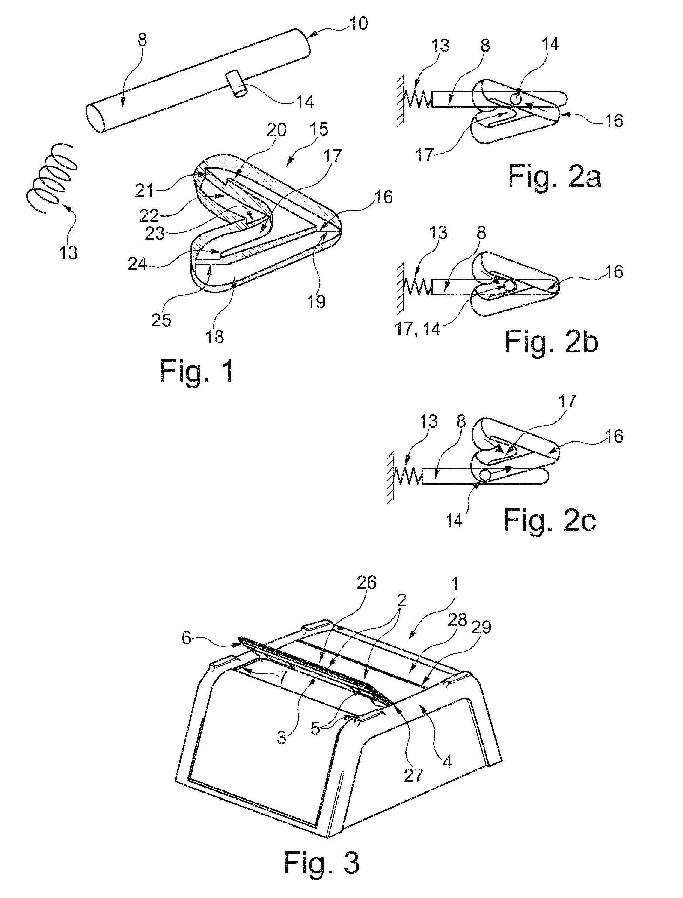

Selon une réalisation illustrée de façon schématique en figures 1 et 2, un mécanisme de montage 9 d'un doigt 8 comprend :
- un ressort 13 d'actionnement dudit doigt vers sa position déployée,
- un ergot 14 saillant radialement dudit doigt,
- une base 15 pourvue d'un premier 16 et un deuxième 17 logement de réception dudit ergot, lesdits logements permettant de bloquer respectivement ledit doigt en position déployée et rétractée,
- un chemin de gorges 18,20,22,24 successives prévues sur ledit support, lesdites gorges réalisant un guidage dudit ergot d'un desdits logements à l'autre, ledit ergot prenant appui - par exemple au moyen d'un ressort, non représenté, interposé entre ledit doigt et ledit ergot - en fond desdites gorges, ledit chemin formant une boucle, chacune desdites gorges comprenant une marche 19,21,23,25 d'extrémité finale empêchant un retour dudit ergot en sens inverse, de façon à contraindre ledit ergot à parcourir ledit chemin selon un sens imposé,

Les chemins de gorges 18,20,22,24 présentent les caractéristiques suivantes :
- une première gorge 18 guide ledit doigt vers l'extérieur, au delà d'une première marche 19 jusqu'audit premier logement, correspondant à la mise dudit doigt en position déployée,
- une deuxième gorge 20 guide ledit doigt vers l'intérieur au delà d'une deuxième marche 21, correspondant à la mise dudit doigt en position escamotée,
- une troisième gorge 22 guide ledit doigt vers l'extérieur, au delà d'une troisième marche 23 jusqu'audit deuxième logement, correspondant à la mise dudit doigt en position rétractée,
- une quatrième gorge 24 guide ledit doigt vers l'intérieur, au delà d'une quatrième marche 25, correspondant à la mise dudit doigt en position escamotée, de manière à permettre le retour dudit ergot dans ladite première gorge.

Selon la réalisation représentée en figure 3, le cache bagages 2 comprend un panneau de recouvrement principal 26, le volet 3 étant relié à l'avant dudit panneau par une charnière avant 27 transversale agencée pour permettre une rotation vers le haut dudit volet, de manière à permettre un accès au compartiment à bagages depuis les places arrière du véhicule.

Selon un mode de réalisation, le volet 3 et le panneau 26 sont couplés entre eux par un moyen d'actionnement - notamment sous forme de ressort non représenté - dudit volet en rotation vers le haut, ce qui permet un relevage automatique dudit volet.

Selon la réalisation représentée, le cache bagages 2 comprend en outre un volet annexe 28, ledit volet étant relié à l'arrière du panneau 26 par une charnière arrière 29 transversale annexe agencée pour permettre une rotation vers le bas dudit volet, de manière à permettre un pliage en accordéon dudit cache bagages.

Bien entendu, on peut prévoir, de façon non représentée, un retournement du système de l'avant vers l'arrière, le cache bagages 2 comprenant un panneau de recouvrement principal 26, le volet 3 étant relié à l'arrière dudit panneau par une charnière arrière transversale agencée pour permettre une rotation vers le haut dudit volet, de manière à élargir l'accès au compartiment à bagages depuis une porte arrière du véhicule, notamment sous forme de hayon.

Selon la réalisation représentée en figure 4, le cache bagages comprend :
- un rideau 30 souple rétractable comprenant un bord avant 31 et un bord arrière 32,
- un dispositif de rappel 33 - comprenant par exemple un arbre d'enroulement actionné en enroulement par un ressort - dudit rideau qui est associé audit bord avant, de sorte que ledit rideau soit mobile entre une configuration rétractée de rangement et une configuration déployée d'utilisation,
- le volet 3 qui est associé le long dudit bord arrière.

Sur la réalisation représentée, il est prévu un jeu de doigts transversaux annexes 24 liés de manière fixe au volet 3, lesdits doigts reposant sur les supports 4 pour assurer un maintien horizontal dudit volet en situation de recouvrement, un appui dudit volet vers le bas entraînant sa rotation autour desdits doigts.

On décrit à présent un cache bagages 2 d'un système 1, ledit cache bagages comprenant un volet 3 de recouvrement, ledit volet comprenant deux parties mâles 6 de dispositifs de verrouillage 5, lesdites parties étant montées latéralement sur ledit volet, lesdites parties mâles comprenant chacune :
- un doigt 8 monté en coulissement transversal entre une position déployée de verrouillage et une position rétractée de déverrouillage,
- un mécanisme de montage 9 dudit doigt sur ledit volet, ledit mécanisme étant agencé de sorte que le passage dudit doigt d'une desdites positions, quelle qu'elle soit, à l'autre se fasse par appui sur l'extrémité libre 10 dudit doigt jusqu'à une position escamotée correspondant à une rétraction supplémentaire dudit doigt par rapport à sa position rétractée.

On décrit enfin un support 4 latéral d'un système 1, ledit support étant pourvu d'une partie femelle 7 d'un dispositif de verrouillage, ladite partie comprenant :
- une butée supérieure 11 destinée à bloquer un déplacement vers le haut d'un doigt 8 lorsqu'il est en position déployée,
- une pente inférieure 12 destinée à permettre une rétraction progressive dudit doigt jusqu'à sa position escamotée.

## Revendications

1. Système (1) de recouvrement d'un compartiment à bagages de véhicule automobile, ledit système comprenant un cache bagages (2), ledit cache bagages comprenant un volet (3) de recouvrement, ledit système comprenant en outre deux supports (4) latéraux dudit volet, lesdits supports étant destinés à être solidaires de la structure dudit véhicule, ledit système comprenant en outre deux dispositifs latéraux de verrouillage (5) dudit volet sur lesdits supports, chacun desdits dispositifs comprenant :
• une partie mâle (6) montée latéralement sur ledit volet,
• une partie femelle (7) solidaire d'un support (4) respectif,
lesdites parties mâles comprenant chacune :
• un doigt (8) monté en coulissement transversal entre une position déployée de verrouillage et une position rétractée de déverrouillage,
• un mécanisme de montage (9) dudit doigt sur ledit volet, ledit mécanisme étant agencé de sorte que le passage dudit doigt d'une desdites positions, quelle qu'elle soit, à l'autre se fasse par appui sur l'extrémité libre (10) dudit doigt jusqu'à une position escamotée correspondant à une rétraction supplémentaire dudit doigt par rapport à sa position rétractée,
et lesdites parties femelles comprenant chacune :
• une butée supérieure (11) bloquant un déplacement vers le haut dudit doigt lorsqu'il est en position déployée,
• une pente inférieure (12) agencée pour permettre une rétraction progressive dudit doigt jusqu'à sa position escamotée par appui effectué vers le bas sur ledit volet,
lesdites butées étant écartées l'une de l'autre de manière à permettre le passage desdits doigts, une fois mis en position rétractée, de part et d'autre desdites butées.

2. Système selon la revendication 1, **caractérisé en ce que** le cache bagages (2) comprend un panneau de recouvrement principal (26), le volet (3) étant relié à l'avant dudit panneau par une charnière avant (27) transversale agencée pour permettre une rotation vers le haut dudit volet, de manière à permettre un accès au compartiment à bagages depuis les places arrière du véhicule.

3. Système selon la revendication 2, **caractérisé en ce que** le volet (3) et le panneau (26) sont couplés entre eux par un moyen d'actionnement dudit volet en rotation vers le haut.

4. Système selon la revendication 2 ou 3, **caractérisé en ce que** le cache bagages (2) comprend en outre un volet annexe (28), ledit volet étant relié à l'arrière du panneau (26) par une charnière arrière (29) transversale annexe agencée pour permettre une rotation vers le bas dudit volet, de manière à permettre un pliage en accordéon dudit cache bagages.

5. Système selon la revendication 1, **caractérisé en ce que** le cache bagages (2) comprend un panneau de recouvrement principal (26), le volet (3) étant relié à l'arrière dudit panneau par une charnière arrière transversale agencée pour permettre une rotation vers le haut dudit volet, de manière à élargir l'accès au compartiment à bagages depuis une porte arrière du véhicule.

6. Système selon la revendication 1, **caractérisé en ce que** le cache bagages (2) comprend :
• un rideau (30) souple rétractable comprenant un bord avant (31) et un bord arrière (32),
• un dispositif de rappel (33) dudit rideau qui est associé audit bord avant, de sorte que ledit rideau soit mobile entre une configuration rétractée de rangement et une configuration déployée d'utilisation,
• le volet (3) qui est associé le long dudit bord arrière.

7. Cache bagages (2) d'un système selon l'une quelconque des revendications 1 à 6, **caractérisé en ce qu'**il comprend un volet (3) de recouvrement, ledit volet comprenant deux parties mâles (6) de dispositifs de verrouillage (5), lesdites parties étant montées latéralement sur ledit volet, lesdites parties mâles comprenant chacune :
• un doigt (8) monté en coulissement transversal entre une position déployée de verrouillage et une position rétractée de déverrouillage,
• un mécanisme de montage (9) dudit doigt sur ledit volet, ledit mécanisme étant agencé de sorte que le passage dudit doigt d'une desdites positions, quelle qu'elle soit, à l'autre se fasse par appui sur l'extrémité libre (10) dudit doigt jusqu'à une position escamotée correspondant à une rétraction supplémentaire dudit doigt par rapport à sa position rétractée.

8. Support (4) latéral d'un système selon l'une quelconque des revendications 1 à 6, **caractérisé en ce qu'**il est pourvu d'une partie femelle (7) d'un dispositif de verrouillage (5), ladite partie comprenant :
• une butée supérieure (11) destinée à bloquer un déplacement vers le haut d'un doigt (8) lorsqu'il est en position déployée,
• une pente inférieure (12) destinée à permettre une rétraction progressive dudit doigt jusqu'à sa position escamotée.
